# FASCICULE DE BREVET EUROPEEN

(11) **EP 3 996 857 B1**
(45) Date de publication et mention de la délivrance du brevet: **09.08.2023**
(21) Numéro de dépôt: 19741986.4
(22) Date de dépôt: 08.07.2019
(51) Int. Cl.: B22C 1/02, B22C 1/16, B22C 1/18, B22C 5/00, B22C 9/02, B22C 19/02, B22C 19/04, B28B 1/00

(54) **PROCÉDÉ ET DISPOSITIF DE FABRICATION ADDITIVE PAR AGGLOMÉRATION D'UN MATÉRIAU GRANULAIRE**
RELAISSTATION ZUR WEITERLEITUNG VON DATEN ENTLANG EINES RELAISPFADES IN EINEM DRAHTLOSEN NETZWERK
METHOD AND DEVICE FOR ADDITIVE MANUFACTURING BY AGGLOMERATION OF GRANULAR MATERIAL

(43) Date de publication de la demande: 18.05.2022
(73) Titulaire: Ecole Centrale De Nantes, 44321 Nantes (FR)
(72) Inventeur: HASCOËT, Jean-Yves, 44300 Nantes (FR); MOGNOL, Pascal, 35000 Rennes (FR); LE NÉEL, Tugdual, 44200 Nantes (FR)
(74) Mandataire: Ipside
(86) Numéro de dépôt international: PCT/EP2019/068306
(87) Numéro de publication internationale: WO 2020/011734

(56) Documents cités:
- EP-A1- 3 040 136
- CN-A- 107 790 628
- US-A1- 2003 133 822
- US-A1- 2011 108 232
- US-A1- 2015 139 849
- US-A1- 2015 258 744
- US-A1- 2016 185 009
- US-A1- 2017 320 128
- US-A1- 2018 036 945

## Description

### Domaine technique

L'invention concerne un procédé et un dispositif de fabrication additive par agglomération d'un matériau granulaire. L'invention s'applique notamment, mais non exclusivement, à un domaine connexe à la fonderie, pour la fabrication des moules, empreintes et noyaux, sans l'utilisation d'un modèle physique que celui-ci soit en bois, en cire, en alliage ou en polymère.

Un moule en sable est un moule à usage unique, comprenant une empreinte et éventuellement des noyaux qui reproduisent, en volume inverse, la forme de la pièce moulée. Selon des techniques traditionnelles, le moule est obtenu en compactant un matériau réfractaire granuleux, dit sable, autour d'un modèle pour l'empreinte, ou dans un modèle, dit boîte à noyau, pour les noyaux. Une fois l'empreinte obtenue, le modèle est retiré du moule, soit en ouvrant le moule selon un ou plusieurs plans de joint, soit en détruisant le modèle avant ou au cours de la coulée. Le modèle est obtenu par façonnage manuel, par usinage ou encore par fabrication additive.

En dehors de la forme qui façonne la pièce moulée, le moule comprend d'autres aménagements tels que des trous de coulée, ou des trous d'évents obtenus de la même manière que l'empreinte.

Afin de figer la forme du moule et de durcir la surface de l'empreinte, un additif est fréquemment ajouté au sable, généralement une résine thermodurcissable, et durci par cuisson ou par voie chimique. Lors de la coulée, le contact de la résine avec le métal en fusion conduit à l'émission de dioxyde carbone, ce qui pose des problèmes environnementaux mais qui est également susceptible de créer des défauts dans les pièces moulées. Bien qu'il existe des liants inorganiques ceux-ci sont peu utilisés. Le durcissement procuré par le liant doit être suffisant pour stabiliser l'empreinte, mais en même temps conserver suffisamment de friabilité à la structure, pour permettre une décoche facile, sans risquer d'abîmer la pièce moulée. Finalement, un des objectifs est aussi de pouvoir conserver les possibilités de recyclage du sable.

Le but de l'invention est de proposer un dispositif et un procédé pour la fabrication d'une structure en sable, notamment un moule, par fabrication additive, sans utiliser de modèle et qui résout les inconvénients de l'art antérieur liés à l'utilisation de liants organiques tout en étant compatible avec le moulage d'un matériau à haut point de fusion tel qu'une fonte ferro-graphitique, en conservant la facilité de démoulage, notamment automatisé, de la pièce.

Un autre objectif de l'invention, est de créer une pièce à partir d'un matériau granulaire aggloméré, dont les propriétés physico-chimiques sont variables selon différentes directions dans la pièce.

Dans tout le texte le terme « sable » désigne un matériau granuleux apte à être compacté / aggloméré pour former une forme définie.

### Technique antérieure

Le document EP-B-0431924 décrit un procédé de fabrication additive, dans lequel un liant est projeté selon un trajet spécifique sur une couche de matériau granulaire. Les grains de la couche sur lesquels a été projeté le liant s'agglomèrent alors que les autres grains restent libres. Le liant est une résine ou un liant inorganique sous la forme d'une suspension colloïdale à base de silicates. En répétant l'opération sur plusieurs couches déposées en strates, le procédé permet de réaliser une pièce à partir d'un matériau granuleux.

L'inconvénient de cette technique de l'art antérieur et de ses dérivés plus récents, est de nécessiter pour sa mise en oeuvre un liant de faible viscosité pour lui permettre à la fois de s'écouler à travers la tête d'impression et de bien imprégner la zone sur lequel il est projeté. Or il est difficile d'obtenir une suspension colloïdale de liant non organique qui présente à la fois une faible viscosité et contienne une quantité de liant suffisante pour obtenir une agglomération rapide des particules de la couche de sable, de sorte que les dispositifs commercialement disponibles utilisent en pratique des résines organiques de faible viscosité comme liants, typiquement de l'ordre de 0,005 à 0,2 Pa.s.

Le document US 2014 212677 décrit un procédé de réalisation d'un moule par fabrication additive, dans lequel l'agglomération sélective est réalisée à partir d'une poudre, obtenue par pulvérisation sèche, d'une solution alcaline de silicates qui agit comme liant. Lesdites particules de la solution alcaline de silicates sont soit additionnées au sable soit déposées sur la couche de sable avant de réaliser d'agglomération sélective. Cette agglomération sélective est réalisée en projetant de l'eau selon un trajet déterminé. L'eau dissout le liant qui agglomère les grains, un séchage naturel ou accéléré est ensuite nécessaire pour réaliser la prise. La difficulté de mise en oeuvre de ce procédé réside notamment dans le contrôle de la zone affectée par l'activation liant, c'est-à-dire la zone mise en contact avec l'eau. Le liant étant incorporé au sable, ou projeté préalablement sur celui-ci, une zone plus importante que celle visée est facilement affectée par le processus, ce qui implique d'ajouter, en plus au sable, des liants hydrauliques aptes à confiner l'eau dans la zone balayée par la tête d'impression.

Le document US 2017/320128 décrit un procédé d'agglomération sélective d'un matériau granuleux, par la projection d'un liant inorganique à faible viscosité à 25°C.

Le document US 2011/108232 décrit un procédé d'agglomération sélective d'un matériau granulaire par un liant organique comprenant du collagène.

Le document CN 107790628 décrit un procédé d'agglomération sélective d'un matériau granuleux, par la projection d'un liant qui peut être un liant inorganique.

### Exposé de l'invention

L'invention vise à résoudre les inconvénients de l'art antérieur et concerne à cette fin un procédé pour la fabrication d'une structure à partir d'un matériau granulaire, dit sable, notamment un moule, ladite fabrication comprenant une phase de fabrication additive, comprenant les étapes consistant à :
i. déposer une couche de sable ;
ii. agglomérer sélectivement la couche de sable par projection, au moyen d'une tête d'impression, d'un liant inorganique comprenant un (méta) silicate de type M₂SiO₃ dissout dans un solvant, dans laquelle le liant inorganique est chauffé préalablement à sa projection à une température apte à lui conférer une viscosité inférieure à 0,2 Pa.s.

Ainsi, en mélangeant le (méta) silicate avec un solvant, notamment de l'eau, de sorte à former un verre liquide, et en chauffant ledit verre liquide avant sa projection, la viscosité est adaptée à la projection par une buse ou tête d'impression, tout en assurant une bonne imprégnation sélective de la zone à agglomérer. Le contrôle de la viscosité du liant organique permet également d'ajouter à celui-ci des additifs spécifiques, notamment pour faire varier les propriétés de la zone agglomérée, tout en conservant une viscosité adaptée à la projection et à l'agglomération.

L'invention est avantageusement mise en oeuvre selon les modes de réalisation et les variantes exposés ci-après, lesquels sont à considérer individuellement ou selon toute combinaison techniquement opérante.

Avantageusement, M est choisi parmi Na, K et Li seuls ou en combinaison.

La quantité de (méta) silicate dans le liant inorganique est comprise entre 5 % et 90 %, préférentiellement entre 10 % et 40 %.

Selon un mode de mise en oeuvre particulier, le liant inorganique comprend des additifs sous la forme de pigments ou de nanoparticules. Ce mode de réalisation permet de modifier les propriétés de la zone agglomérée par les additifs.

Avantageusement, M est Na et la proportion de silicate de sodium dans le liant inorganique est égale à 30 %. Na₂SiO₃ est particulièrement avantageux par son faible coût. Une proportion de 30 % permet d'atteindre une viscosité adaptée à la mise en oeuvre du procédé.

Avantageusement le solvant est de l'eau.

Avantageusement le procédé objet de l'invention comprend après l'étape ii) une étape consistant à :
iii. sécher la zone affectée par la projection du liant.

Ainsi la prise du liant est plus rapide, de même que le temps de réalisation du moule.

Selon un mode de réalisation, le séchage est obtenu par un chauffage.

Selon des variantes de ce mode de réalisation, le chauffage est localisé au niveau de la zone de projection du liant ou appliqué à l'ensemble de la structure au cours ou postérieurement à la phase de fabrication additive.

Selon un autre mode de réalisation, le séchage est obtenu en mettant en contact la zone affectée par la projection du liant avec du CO₂.

Selon un mode de réalisation du procédé objet de l'invention, l'étape i) est réalisée au moyen d'une trémie déplacée à vitesse constante et il comprend une étape consistant après l'étape ii) à déposer une couche de matériau granulaire de caractéristiques différentes de celle déposée lors de la réalisation de l'étape i) précédente. Ce mode de réalisation permet de créer des variations de propriétés dans l'épaisseur de la pièce réalisée, notamment pour adapter celle-ci aux contraintes qu'elle subit au cours de son utilisation, ou pour influencer la vitesse d'écoulement ou de refroidissement de la matière coulée dans le cas de l'utilisation de la pièce obtenue comme moule.

Selon un mode de réalisation, le procédé objet de l'invention comprend après l'étape ii) ou après l'étape iii) une étape consistant à :
iv. extraire la structure agglomérée du lit de sable,
et avantageusement cette étape comprend l'injection d'un gaz sous le lit de sable afin de fluidifier la partie non agglomérée dudit lit de sable. Ainsi la structure agglomérée est aisément retirée du lit de sable.

L'invention concerne également un dispositif pour la mise en oeuvre du procédé objet de l'invention selon l'un quelconque de ses modes de réalisation, lequel dispositif comprend :
- des moyens de rétention, aptes à contenir un lit de sable ;
- une buse de projection apte à projeter le liant inorganique sur une zone définie du lit de sable ;
- des moyens pilotés pour le déplacement relatif de la buse par rapport au lit de sable ;
- des moyens pour déposer une couche de sable dans les moyens de rétention ;
- des moyens de chauffage du liant inorganique avant sa projection par la buse.

Selon un premier mode de réalisation du dispositif objet de l'invention, le liant inorganique est contenu dans un récipient chauffé.

Selon un deuxième mode de réalisation, compatible avec le précédent, les moyens de chauffage du liant organique du dispositif objet de l'invention, comprennent des moyens pour chauffer ledit liant lors de son passage dans la buse de projection ou de son transfert du réservoir vers la buse de projection.

Il est ainsi possible de chauffer le liant à une température adaptée à un effet désiré lors de la projection sur le lit de sable.

Avantageusement, le dispositif objet de l'invention comprend :
- un moyen de chauffage comprenant un faisceau laser, focalisé sur une zone exposée à la projection du liant.

Ainsi le liant est séché immédiatement après sa projection, ce qui assure la stabilité des sections ainsi réalisées.

Avantageusement, le dispositif objet de l'invention comprend une enceinte pour confiner l'atmosphère entourant le sable dans les moyens de rétention. Ainsi les conditions de prise du liant sont optimisées en agissant sur la composition de l'atmosphère, son hygrométrie, notamment, ou encore sur sa température.

Avantageusement, le dispositif objet de l'invention, comprend, selon ce dernier mode de réalisation, des moyens pour contrôler la teneur en CO₂ de l'atmosphère contenue dans l'enceinte.

Ainsi, selon des variantes de mise en oeuvre, la prise du liant est accélérée par l'enrichissement de l'atmosphère en CO₂ dans l'enceinte, ou ralentie en réduisant ladite teneur CO₂, de sorte à éviter, par exemple, le bouchage des buses lors de la projection du liant.

Avantageusement, la table des moyens de rétention du dispositif objet de l'invention comprend une pluralité d'orifices pour l'injection d'un gaz sous le lit de sable. Ainsi, après la réalisation de la structure par agglomération sélective, celle-ci est aisément retirée du lit de sable non aggloméré, sans risque de dégradation de celle-ci, notamment de manière automatisée, par l'effet de fluidification du lit de sable obtenu par l'injection de gaz.

Selon un mode de réalisation particulier, les moyens de rétention, sont créés dans le lit de sable par une agglomération sélective réalisée selon le procédé objet de l'invention.

Selon un mode réalisation du dispositif objet de l'invention, celui-ci comprend une trémie de déversement à ouverture variable. Ce mode de réalisation permet un contrôle précis de l'épaisseur de la couche de sable déposée.

Le procédé et le dispositif objets de l'invention sont avantageusement utilisés pour la réalisation d'une pièce à propriétés physico-chimiques variables selon différentes directions dans la pièce. Cette possibilité ouvre de nouvelles perspectives dans la conception et la réalisation de pièces, notamment de moules.

### Description sommaire des dessins

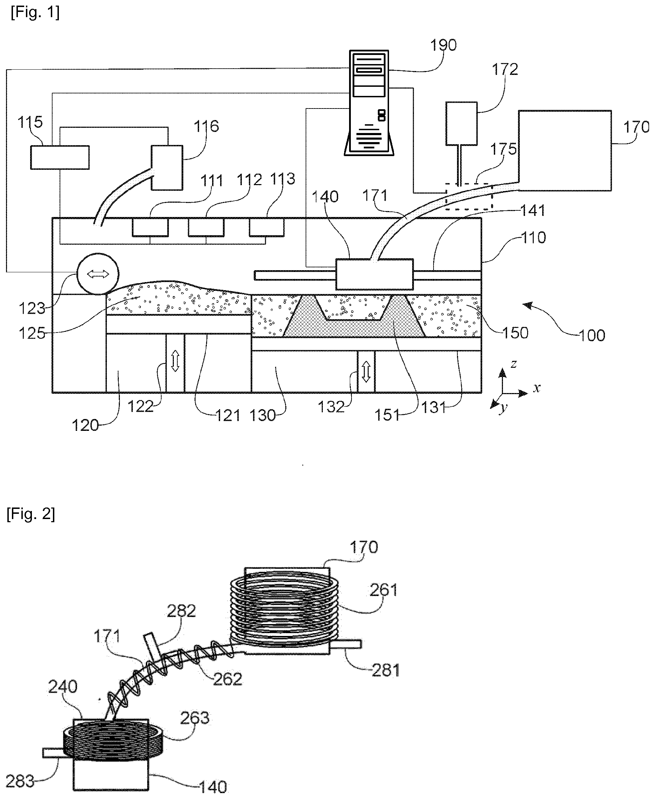

L'invention est exposée ci-après selon ses modes de réalisation préférés, nullement limitatifs, et en référence aux figures 1 à 8, dans lesquelles :
Fig. 1
   [fig. 1] représente selon une vue schématique en coupe un exemple de réalisation du dispositif objet de l'invention ;
Fig. 2
   [fig. 2] montre selon une vue de principe un exemple de réalisation du chauffage du liant inorganique avant sa projection par le dispositif objet de l'invention ;
Fig. 3

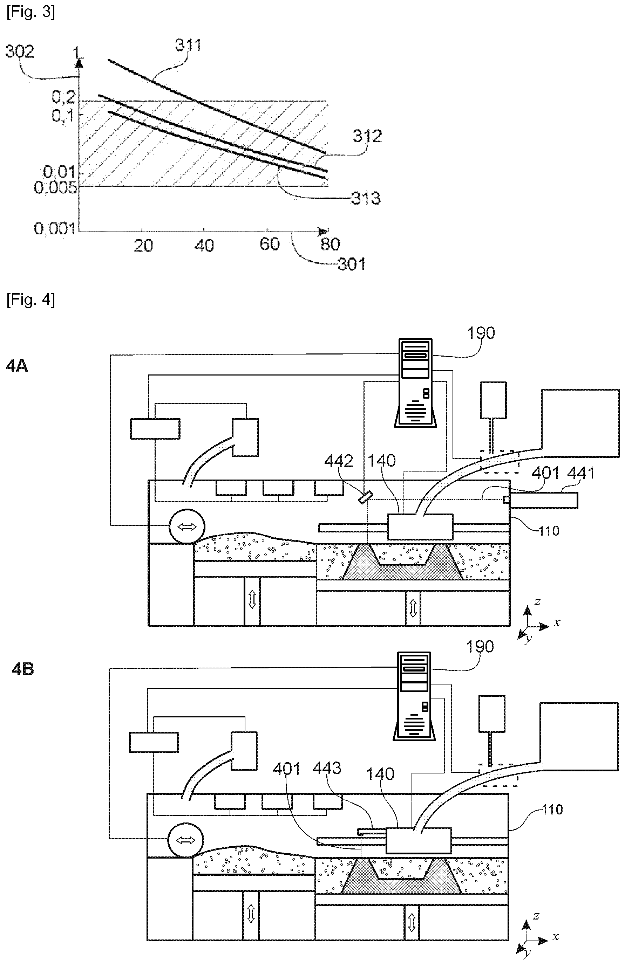

   [fig. 3] est un exemple d'évolution de la viscosité d'un liant inorganique en fonction de la température et de sa concentration en (méta) silicates dans un diagramme semi-logarithmique ;
Fig. 4
   [fig. 4] représente selon les mêmes vues que la figure 1, des exemples de réalisation du dispositif objet de l'invention comprenant des moyens de chauffage localisés, de la zone exposée à la projection de liant inorganique, figure 4A avec des moyens de génération d'un faisceau laser fixe, figure 4B avec des moyens de génération d'un faisceau laser mobile ;
Fig. 5

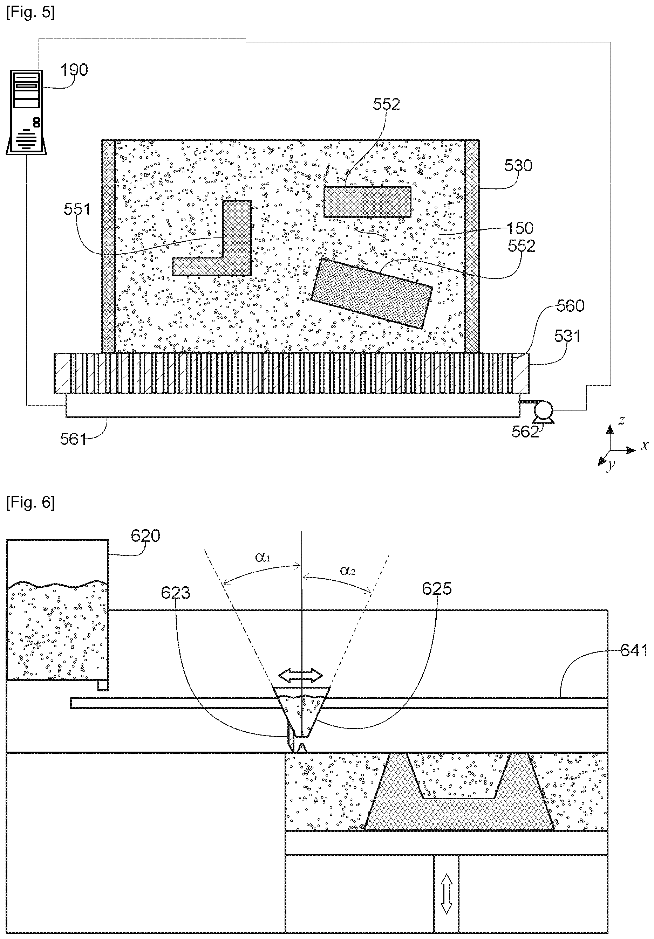

   [fig. 5], montre selon la même coupe que la figure 4, un exemple de réalisation des moyens de rétention du dispositif objet de l'invention ;
Fig. 6
   [fig. 6], montre selon une même vue que celle de la figure 4 un exemple de réalisation du dispositif objet de l'invention utilisant une trémie de déversement pour le dépôt d'un matériau granulaire ; pour faciliter la lecture, la figure 6 ne représente que les éléments différents par rapport aux autres modes de réalisation ;
Fig. 7

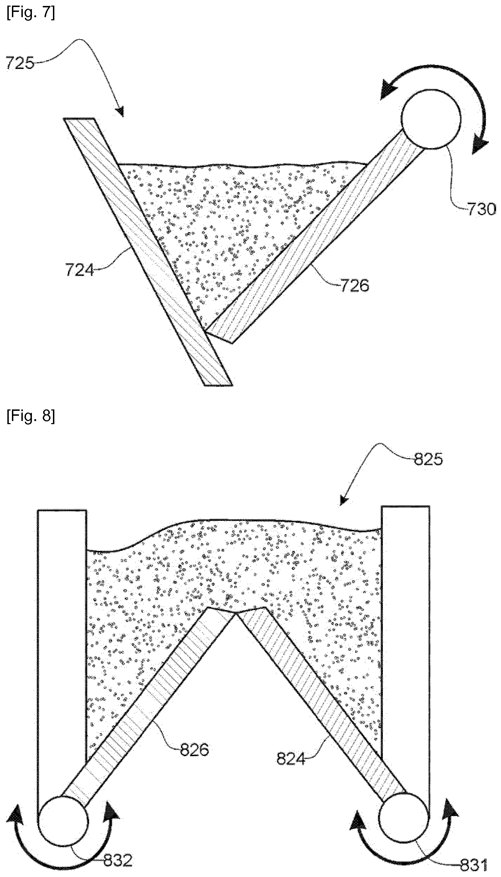

   [fig. 7] représente selon une vue schématique en coupe un exemple de réalisation d'une trémie à ouverture variable ;
Fig. 8
   [fig. 8] montre selon une vue schématique en coupe, un autre exemple de réalisation d'une trémie à ouverture variable.

### Meilleure manière de réaliser l'invention

Figure 1, selon un exemple de réalisation, le dispositif (100) objet de l'invention comprend une enceinte fermée (110) contenant une atmosphère contrôlée notamment en termes de composition et de température.

Une pluralité de capteurs, placés dans ladite enceinte, permet d'en mesurer, par exemple, la température (111), l'hygrométrie (112) et le taux de CO₂ (113). La nature de l'atmosphère dans l'enceinte est déterminée par la nature du sable utilisé et la nature du liant inorganique, de sorte à assurer un étalement aisé du sable et son agglomération rapide dans les zones mises en contact avec le liant inorganique.

À titre d'exemple, l'atmosphère comprise dans l'enceinte comprend 60 % d'humidité et est portée à 20 °C pour une teneur en CO₂ de l'ordre de 0,04 %.

Ces conditions sont utilisées pour la mise en oeuvre du procédé objet de l'invention avec un liant inorganique de type Na₂SiO₃.

Selon un autre mode de mise en oeuvre, la température de l'enceinte est portée à une température de 80°C pour accélérer le séchage de la structure en cours de fabrication.

Selon un autre exemple, l'atmosphère contenue dans l'enceinte (110) est enrichie à une teneur en CO₂ supérieure à 0,04 % afin d'accélérer la prise du liant inorganique lors de sa projection.

Selon un autre exemple de mise en oeuvre, la teneur en CO₂ de l'atmosphère contenue dans l'enceinte, est appauvrie en CO₂, à une teneur inférieure à 0,04 %, de sorte à éviter le bouchage des buses de projection du liant.

Ainsi, en agissant sur les paramètres tels que l'hygrométrie, la température et la teneur en CO₂ dans l'enceinte fermée (110), le dispositif et le procédé objets de l'invention permettent d'ajuster finement les conditions de prises ou de séchage du liant en fonction de la structure fabriquée et de la nature du sable mis en oeuvre.

À cette fin, les paramètres relatifs à l'atmosphère dans l'enceinte étant déterminés, les informations issues des capteurs (111, 112, 113) placés dans ladite enceinte, sont utilisées par un module électronique (115) qui pilote un module (116) de contrôle de l'atmosphère de manière à maintenir les paramètres correspondants dans les fourchettes désirées.

À l'intérieur de l'enceinte, selon un exemple de réalisation, un premier bac (120) comprend une réserve de matière, sous la forme d'un tas de sable (125) placé sur un plateau mobile (121) déplaçable verticalement au moyen d'un vérin (122), c'est-à-dire parallèlement à l'axe zde la figure 1.

Un second bac (130) dit de rétention, comprend une table (131) et des moyens (132) pour déplacer verticalement ladite table, par exemple un système de vis à billes ou un moteur linéaire.

Ces moyens supportent la, ou les, structures (151) en cours de fabrication et le lit de sable (150) à partir duquel la, ou lesdites, structures (151) sont réalisées.

Ladite structure (151) est créée par strates successives, en agglomérant sélectivement les grains de sable dans une couche d'épaisseur définie, préalablement déposée.

À cette fin, un ou plusieurs racleurs (123) pilotés permettent de transférer une partie du tas de sable (125) compris dans le premier bac (120) vers le bac de rétention (130) selon une couche d'épaisseur sensiblement uniforme.

Pour ce faire, selon cet exemple de réalisation, la table (131) du bac de rétention est descendue (dans le sens des *z* négatifs selon la figure 1) d'une hauteur correspondant à l'épaisseur désirée de la couche de sable. Le plateau mobile (121) du premier bac est lui déplacé vers le haut (dans le sens des *z* positifs selon la figure 1) d'une valeur sensiblement égale à l'épaisseur de la couche, préférentiellement légèrement supérieure. Puis, le ou les racleurs (123) se déplacent vers le bac de rétention (sens des *x* positifs selon la figure 1) pour transférer une couche de sable d'épaisseur sensiblement uniforme, soit sur la table (131) du bac de rétention, lors de la création de la première couche, soit sur le lit de sable (151) déjà existant dans ce bac au cours de la fabrication. À leur retour vers le premier bac (sens des *x* négatifs selon la figure 1) le ou les racleurs (123) égalisent l'épaisseur de la couche de sable ainsi transférée, ramenant l'éventuelle surépaisseur de sable dans le premier bac.

La couche de sable étant déposée, le sable compris dans ladite couche est aggloméré sélectivement par un ensemble de projection (140), porté par des moyens de guidage (141) et de déplacement selon au moins 2 axes, par exemple *x* et *y* selon la figure 1, et dont les déplacements selon ces axes sont pilotés par un directeur de commande numérique (190).

L'ensemble de projection (140) comprend une ou plusieurs buses de projection, comprenant des électrovannes également pilotées par le directeur de commande numérique (190), lesquelles buses projettent sur le lit de sable (150) un liant inorganique contenu sous forme liquide dans un réservoir (170).

Ainsi, le débit dans chaque buse de l'ensemble de projection est piloté par le directeur de commande numérique. Selon des variantes de réalisation, toutes les buses de l'ensemble de projection sont identiques, ou l'ensemble de projection comprend différentes buses, correspondant à différentes finesses de jet, ou adaptées à la projection de différentes natures de liant inorganique.

Avantageusement, l'ensemble de projection permet le montage de différents types de buses à chaque emplacement prévu à cet effet.

Selon cet exemple de réalisation, le réservoir (170) est placé à l'extérieur de l'enceinte et le liant inorganique est acheminé vers l'ensemble de projection (140) au moyen d'un conduit (171). Alternativement, le réservoir est placé à l'intérieur de l'enceinte ou fait partie intégrante de l'ensemble de projection. Selon encore un autre mode de réalisation, le dispositif comprend un réservoir externe et un réservoir tampon au niveau de l'ensemble de projection.

Le liant inorganique est avantageusement une solution d'un ou plusieurs (méta) silicates dans l'eau. La proportion de (méta) silicates est sélectionnée en fonction de la nature du sable, du temps de prise visé et de la viscosité du liant inorganique de sorte que celle-ci soit compatible avec le diamètre de passage des buses de l'ensemble de projection, et par suite, de la finesse de l'agglomération sélective visée. Typiquement la proportion de (méta) silicate est comprise entre 10 % et 40 %.

Selon un mode de réalisation préféré le (méta) silicate est un silicate de sodium, par exemple Na₂SiO₃, à raison de 30 % de silicate de sodium pour 70 % d'eau, en pourcentages pondéraux, dans le liant inorganique. Alternativement ou de manière complémentaire, le liant inorganique comprend un silicate de lithium ou un silicate de cobalt. Selon des modes de réalisation particuliers, le liant inorganique comprend des additifs par exemple des pigments ou des nanoparticules, par exemple en suspension colloïdale dans ledit liant inorganique. Ces additifs, notamment les nanoparticules, permettent de modifier les propriétés mécaniques des zones agglomérées constituant la structure (151), notamment d'en accroître la dureté ou la stabilité à haute température, ou encore la plasticité. Lesdits additifs, notamment les nanoparticules, permettent aussi de fonctionnaliser la surface ou l'ensemble de la structure (151) ainsi produite, en lui conférant des propriétés particulières, notamment optiques ou électriques, telles qu'une conductivité ou semi-conductivité électrique, ou encore magnétiques ou thermiques sans que ces exemples ne soient limitatifs.

Ainsi, les additifs permettent d'ajuster, par exemple, les propriétés thermiques de la structure obtenue à partir du procédé objet de l'invention, en lui conférant des propriétés de conduction, de rayonnement ou d'effusivité thermiques adaptées aux opérations de moulage réalisées à partir de cette structure, notamment en fonction de la nature du matériau moulé, ou encore, de rendre compatible ladite structure, notamment en surface, avec des techniques de chauffage du moule par induction électromagnétique ou par micro-ondes.

Selon des exemples de mise en oeuvre, lesdites propriétés sont atteintes sur la pièce, directement à l'issue de la mise en oeuvre du procédé de fabrication additive objet de l'invention, ou après que ladite pièce ainsi obtenue ait subi un traitement supplémentaire, chimique, thermique ou électrique.

Selon d'autres modes de mise en oeuvre, compatibles avec les précédents, des additifs tels que des sels, par exemple NaCl ou KCI, sont ajoutés à la solution, afin de modifier son comportement rhéologique, plus particulièrement, l'évolution de sa viscosité avec la température, ou encore des polymères, afin de mieux contrôler la cohérence du jet en sortie des buses de projection.

Selon un autre mode de réalisation des additifs sont ajoutés à la solution de liant inorganique afin de modifier ses propriétés de mouillage ou de diffusion par capillarité dans le lit de sable.

Ainsi, selon un mode de réalisation particulier, le dispositif objet de l'invention, comprend un deuxième réservoir (172) comprenant des additifs et un module (175) de mélange comprenant des moyens de dosage et d'homogénéisation, piloté par le directeur de commande numérique (190), de sorte à contrôler la quantité d'additif dans le liant inorganique dispensé à l'ensemble de projection (140).

Ce mode de réalisation permet notamment, en faisant varier la proportion d'additif le long de la trajectoire de l'ensemble de projection, d'obtenir dans la structure (151) des gradients de propriétés, ou des propriétés différentes à coeur et en surface de la structure.

Ainsi, à titre d'exemple non limitatif, la structure comprend une surface moulante dont la surface est rendue sensible au chauffage par rayonnement électromagnétique, par une teneur supérieure en additifs, alors que le reste de la structure est transparent à un tel rayonnement électromagnétique.

Selon un autre mode de réalisation combiné éventuellement à ce dernier, le procédé et le dispositif objet de l'invention permettent également de faire varier les propriétés du matériau granulaire déposé sur chaque couche et ainsi, que ce soit par sa nature ou sa granulométrie, d'obtenir des variations de propriétés mécaniques, thermiques, électriques ou tribologiques, sans que cette liste ne soit limitative, dans les différentes dimensions de la pièce réalisée.

Le liant étant projeté de manière sélective sur la couche de sable déposée, celui-ci sèche rapidement, naturellement ou, par exemple, du fait de la température imposée dans l'enceinte, ou de l'atmosphère enrichie en CO₂ dans ladite enceinte (110), agglomérant ainsi les grains dans l'épaisseur de la couche dans la zone où a été projeté ledit liant, le cas échéant avec les zones déjà agglomérées lors de la passe précédente. Ainsi, la structure (151) est construite par strates successives. Le débit de liant par les buses de l'ensemble de projection est contrôlé par le directeur de commande numérique (190) en fonction de la nature du liant, notamment sa viscosité et son temps de prise ou de séchage, de l'épaisseur de la couche de sable, de la nature du sable et de la vitesse de déplacement de l'ensemble de projection le long de sa trajectoire. Lors de chaque passe, une ou plusieurs buses de l'ensemble de projection sont utilisées.

Figure 2, afin de contrôler la viscosité du liant inorganique et notamment de rendre celle-ci compatible avec les diamètres de passage des buses, un dispositif de chauffage est installé entre le réservoir de liant et l'ensemble de projection. Selon un exemple de réalisation, l'ensemble de projection (140) comprend un réservoir tampon (240) de liant inorganique connecté à un réservoir principal (170) situé à l'intérieur ou à l'extérieur de l'enceinte, via un conduit (171).

Le dispositif de chauffage du liant inorganique comprend tout ou partie d'un moyen de chauffage (261) du liant contenu dans le réservoir principal (170), d'un moyen de chauffage (262) agissant sur le liant inorganique lors de son passage dans le conduit (171) et d'un moyen de chauffage (263) du liant contenu dans le réservoir tampon (240).

Lesdits moyens de chauffage sont régulés de sorte à fixer la température du liant dans le réservoir principal, dans le conduit et dans le réservoir tampon, à partir des informations délivrées par des capteurs de température (281, 282, 283) mesurant la température du liant dans le réservoir principal (170), dans le conduit (171) et dans le réservoir tampon (240).

Selon des exemples de mise en oeuvre, la température du liant est uniforme du réservoir principal à l'ensemble de projection, ou le liant est progressivement chauffé depuis le réservoir principal jusqu'à sa projection sur le lit de sable au niveau de l'ensemble de projection (140).

Les moyens de chauffage (251, 252, 253) sont des moyens internes ou externes aux réservoirs ou au conduit, et utilisent seuls ou en combinaison, un chauffage par résistance électrique, par micro-ondes ou par induction sans que ces exemples ne soient limitatifs.

Figure 3, la température du liant lors de sa projection est notamment déterminée par sa viscosité. Celle-ci dépend de la nature du liant, notamment de la nature des (méta) silicates et de leur proportion dans le solvant ainsi que des éventuels additifs.

À titre d'exemple, l'évolution de la viscosité (302) dynamique exprimée en Pa.s selon une échelle logarithmique, d'une solution de silicate de sodium, est donnée en fonction de la température (301) exprimée en °C, pour différentes concentrations de silicate de sodium dans l'eau, respectivement 34 % (311), 28 % (312) et 17 % (313).

Pour pouvoir être projeté par les buses et notamment éviter leur bouchage lors de la projection, la viscosité du liant doit être inférieure à 0,2 Pa.s. Une viscosité trop faible conduit à un mauvais contrôle de la zone affectée par le liant inorganique lors de la projection, ledit liant pouvant se répandre sur une zone plus importante que celle visée dans le temps de prise ou de séchage.

Ainsi, la viscosité du liant lors de la projection est supérieure à 0,005 Pa.s. Ces limites, correspondant à la zone hachurée de la figure 3, permettent de déterminer la température de chauffage du liant, en fonction de la concentration de (méta) silicate qu'il contient.

Pour une formulation de liant donnée, la courbe d'évolution de la viscosité est obtenue par des essais de viscosité dynamique en fonction de la température. Typiquement la température de chauffage du liant est comprise entre 30°C et 100°C.

Figure 4, le temps de prise ou de séchage de la zone exposée au liant est accéléré par l'enrichissement de l'atmosphère de l'enceinte (110) en CO₂, ou par la température imposée dans l'enceinte. Alternativement ou de manière complémentaire, selon un exemple de réalisation, la zone exposée à la projection du liant est chauffée au moyen d'un faisceau laser, dirigé sur ladite zone immédiatement après la projection de liant.

Figure 4A, selon un exemple de réalisation, le générateur de faisceau laser (441) est fixe par rapport à l'enceinte (110) et le faisceau (401) est dirigé sur la zone par un miroir (442) orientable piloté par le directeur de commande numérique (190).

Figure 4B, selon un autre exemple de réalisation, le générateur de faisceau laser (443) est lié à l'ensemble de projection (140) et se déplace avec celui-ci.

La puissance du laser et son temps d'interaction avec la zone exposée à la projection du liant, sont réglés de sorte que ladite zone soit chauffée à une température comprise entre 30°C et 200°C. Cette température est sélectionnée, en fonction de la nature du liant projeté, de la composition et de la température de l'atmosphère dans l'enceinte.

Ainsi, le dispositif objet de l'invention permet un chauffage localisé, sélectif et variable de la zone agglomérée.

En revenant à la figure 1, à l'issue de la fabrication, la structure (151) agglomérée est retirée du lit de sable (150) et subit éventuellement des traitements complémentaires de séchage, par micro-ondes ou en étuve, ou encore, une cuisson, visant à parfaire sa consolidation sans que ces exemples ne soient limitatifs.

Dans le cas où ladite structure est destinée à constituer un moule, elle est insérée dans un châssis avant son utilisation, afin de lui conférer des propriétés mécaniques d'ensemble suffisantes pour résister aux pressions mises en oeuvre.

Le sable excédentaire du lit de sable (150) est récupéré et recyclé pour être à nouveau utilisé pour la constitution d'une autre structure.

La figure 5 montre deux modes de réalisation particuliers du dispositif et du procédé objets de l'invention, ces deux modes étant distincts ou combinés.

Ainsi, selon un mode de réalisation, la rétention du lit de sable (150) sur la table (531) est obtenue par la création de murs (530), lesquels murs sont réalisés par l'agglomération sélective du lit de sable au cours de la fabrication additive de la structure (551, 552, 553).

Selon un deuxième mode de réalisation, le lit de sable comprend à l'issue de la fabrication additive, une ou plusieurs structures (551, 552, 553) s'étendant à des altitudes variables dans ledit lit de sable.

La localisation de ces structures dans le lit de sable (150) et en regard d'une référence, par exemple la table (531), est connue du fait du programme de commande numérique utilisé pour la réalisation par agglomération sélective desdites structures, de sorte que celles-ci peuvent être retirées dudit lit de sable non aggloméré par un moyen automatique (non représenté) tel qu'un robot ou un manipulateur, muni d'un moyen de préhension adapté et piloté, par exemple, par le directeur de commande numérique (190).

Les conditions de fabrication programmées des dites structures permettent également d'en connaître les zones plus faibles ou plus résistantes adaptées à la préhension desdites structures.

Cependant, le sable non aggloméré entourant lesdites structures rend cette opération délicate avec un risque de dégrader lesdites structures lors de leur extraction.

Afin de simplifier cette opération et de la rendre automatisable, le dispositif objet de l'invention comprend des moyens permettant de fluidiser le lit de sable non aggloméré de sorte à faciliter l'extraction des structures ou de faciliter l'enlèvement dudit sable notamment par des moyens d'aspiration, les deux étant éventuellement combinés.

À cette fin, selon un exemple de réalisation, la table (531) comprend sur toute ou partie de sa surface une pluralité d'orifices (560) et des moyens (561, 562) pour injecter par lesdits orifices un gaz dans le lit de sable, préférentiellement sous ledit lit de sable.

Les moyens d'injection du gaz sont pilotés par le directeur de commande numérique (190) et comprennent, par exemple, une pompe (562) et des moyens répartiteurs (561) permettant de répartir le flux injecté entre les différents orifices de la table.

Ainsi, seule une partie des orifices (560), correspondant aux zones où la fluidification du lit de sable est visée, est alimentée lors des extractions successives des structures (551, 552, 553) agglomérées.

Selon des exemples de réalisation non limitatifs, le gaz injecté est de l'air comprimé, du CO₂ ou de l'argon ou encore un mélange de gaz selon la nature du sable.

Le débit est ajusté pour obtenir l'effet de fluidification visé dans la zone visée et notamment en fonction de l'épaisseur de la couche de sable non aggloméré.

Ce dispositif est préférentiellement utilisé lors de l'extraction des structures, après la phase de fabrication additive. Il est cependant également utilisable au cours de la fabrication additive, avec des débits différents de ceux utilisés pour l'extraction, notamment pour mettre en contact les parties de la structure en cours de fabrication avec du dioxyde de carbone, afin d'accélérer la prise du liant inorganique.

Figure 6, selon un exemple de réalisation du procédé et du dispositif objets de l'invention, le dépôt de la couche de sable en vue de son agglomération sélective est obtenu au moyen d'une trémie (625) de déversement, déplacée au-dessus du lit de sable par des moyens de guidage et de motorisation (641), qui selon des variantes de réalisation, sont les mêmes que ceux assurant le déplacement relatif du dispositif d'agglomération sélective ou des moyens différents. Ces moyens sont pilotés par le directeur de commande numérique.

Ce mode de réalisation permet de simplifier le dispositif de dépose de la couche de sable. Il permet plus particulièrement de changer la nature de la matière déposée, potentiellement lors de la dépose de chaque nouvelle couche, et ainsi de faire varier les caractéristiques de la pièce obtenue en conséquence.

À cette fin, le dispositif objet de l'invention selon ce mode de réalisation comprend un ou plusieurs réservoirs (620) de matériaux granulaires, comprenant un système de distribution.

Avant le dépôt d'une nouvelle couche, la trémie (625) est remplie en la plaçant sous l'un desdits réservoirs.

La trémie (625) du dispositif objet de l'invention ne comprend pas de dispositif de dosage ou de distribution de sorte à ne pas conserver de matière dans les interstices présents dans ce type d'aménagement.

La matière se déverse par une ouverture libre en fond de trémie selon un écoulement en masse.

Afin que la condition d'écoulement en masse du matériau granulaire soit remplie, l'angle de déversement (α₁+α₂) de la trémie doit être inférieur ou égal à 90°, préférentiellement inférieur à 60°.

Avantageusement, la trémie (625) comprend son propre racleur (623) égaliseur de la couche qui se déplace avec ladite trémie.

La quantité de matière déposée est réglée par la surface de l'ouverture en fond de trémie et par la vitesse de déplacement relative de la trémie par rapport au lit de sable lors de la dépose de la couche.

Figure 7, selon un exemple de réalisation, afin d'obtenir un meilleur contrôle du débit de matériau granulaire lors de la dépose de la couche de matière sur le lit de sable, la trémie (725) du dispositif objet de l'invention, comprend, selon un exemple de réalisation, une ouverture de déversement variable.

Afin de conserver l'avantage de l'absence de résidus des dépôts précédents, la variation d'ouverture se fait sans interposition d'obstacle dans ladite ouverture mais par déplacement d'une ou des deux parois de la trémie.

Ainsi, selon cet exemple de réalisation, l'une des parois (726) est déplacée relativement à l'autre (724) par des moyens motorisés (730) pilotés par le directeur de commande numérique du dispositif objet de l'invention. Ce déplacement motorisé permet de fermer ou d'ouvrir plus ou moins l'orifice de déversement de la trémie (725).

Figure 8, selon un autre exemple de réalisation, la trémie (825) du dispositif objet de l'invention comprend un système d'ouverture par volets inversés. Ce mode de réalisation permet de moins charger les volets (826, 824) et leurs moteurs (831, 832) de commande lorsque la trémie (825) n'est pas en mode de déversement.

La description ci-avant et les exemples de réalisation, montrent que l'invention atteint le but visé, et permet d'agglomérer un matériau granulaire afin d'obtenir une structure en utilisant un liant inorganique. Plus particulièrement dans la fabrication d'un moule, le procédé et le dispositif objets de l'invention permettent de réaliser celui-ci de manière reproductible et automatisée, sans l'utilisation d'un modèle, avec la possibilité d'intégrer les noyaux, le tout en une seule opération. L'utilisation d'un liant inorganique permet d'éviter les inconvénients de l'art antérieur liés à l'utilisation de résines organiques sur la qualité des pièces moulées et sur la possibilité de recycler le sable. Le procédé est adaptable à tout type de matériau granulaire, notamment des matériaux métalliques. Le moule obtenu par le procédé objet de l'invention n'est pas limité à la mise en oeuvre d'opérations de fonderie. Les possibilités offertes, notamment de varier localement les propriétés thermiques, électriques, électromagnétiques, mécaniques, tribologiques ou optiques de la structure obtenue par le procédé objet de l'invention, rendent ladite structure également adaptée à la fabrication de moules destinés à la mise en oeuvre de matériaux composites à matrice organique thermodurcissable ou thermoplastique, pour des opérations de cuisson, de consolidation ou d'imprégnation par transfert de résine, ainsi que de moules pour la mise en oeuvre du procédé MIM acronyme de « *Metal Injection Molding »* dans lequel une poudre additionnée d'un liant est moulée par injection, la pièce brute étant ensuite déliantée et frittée à haute température.

Les exemples de réalisation du dispositif sont donnés à titre illustratif. Les différents mouvements de l'ensemble de projection, du premier bac, du bac de rétention, des racleurs ou autres moyens de transfert du lit de sable, de la trémie de déversement ou encore du laser de chauffage localisé, sont, selon des variantes de réalisation, opérés par un ou plusieurs robots ou manipulateurs, de structure anthropomorphique ou autre, à cinématique sérielle ou parallèle, sans sortir du cadre de l'invention.

## Revendications

1. Procédé pour la fabrication d'une structure (151, 51, 552, 553) à partir d'un matériau granulaire, dit sable, notamment un moule, comportant une phase de fabrication additive comprenant les étapes consistant à : (i) déposer une couche de sable ; (ii) agglomérer sélectivement la couche de sable par projection, au moyen d'une buse de projection, d'un liant inorganique comprenant un (méta) silicate de type M₂SiO₃ dissout dans un solvant, où M est choisi parmi Na, K et Li, dans laquelle le liant inorganique est chauffé préalablement à sa projection à une température comprise entre 30°C et 100°C de sorte à lui conférer une viscosité supérieure à 0,005 Pa.s et inférieure à 0,2 Pa.s.

2. Procédé selon la revendication 1, dans lequel la quantité de (méta) silicate dans le liant inorganique est comprise entre 5 % et 90 %, préférentiellement entre 10 % et 40 %.

3. Procédé selon la revendication 1, dans lequel M est Na et la proportion de silicate de sodium dans le liant inorganique est égale à 30 %.

4. Procédé selon la revendication 1, dans lequel le liant inorganique comprend des additifs sous la forme de pigments ou de nanoparticules.

5. Procédé selon la revendication 1, dans lequel le solvant est de l'eau.

6. Procédé selon la revendication 1, comprenant après l'étape ii) une étape consistant à : (iii) sécher la zone affectée par la projection du liant.

7. Procédé selon la revendication 6, dans lequel le séchage est obtenu par un chauffage.

8. Procédé selon la revendication 6, dans lequel le séchage est obtenu en mettant en contact la zone affectée par la projection du liant avec du CO₂.

9. Procédé selon la revendication 1, dans lequel l'étape i) est réalisée au moyen d'une trémie déplacée à vitesse constante et qui comprend une étape consistant après l'étape ii) à déposer une couche de matériau granulaire de caractéristiques différentes de celle déposée lors de la réalisation de l'étape i) précédente.

10. Procédé selon la revendication 1 ou la revendication 6, comprenant après l' étape ii) ou après l'étape iii) une étape consistant à : (iv) extraire la structure agglomérée (551, 552, 553) du lit de sable, comprenant l'injection d'un gaz sous le lit de sable (150) afin de fluidifier la part non agglomérée dudit lit de sable.

11. Dispositif pour la mise en oeuvre du procédé selon la revendication 8, lequel dispositif comprend : des moyens de rétention (130, 530) comprenant une table (131, 531), aptes à contenir un lit de sable (150) ; une buse de projection apte à projeter le liant inorganique sur une zone définie du lit de sable (150) ; des moyens pilotés (140, 141, 190) pour le déplacement relatif de la buse par rapport au lit de sable (150) ; des moyens (121, 122, 123) pour déposer une couche de sable dans les moyens de rétention (130) ; des moyens de chauffage (261, 262, 263) du liant inorganique avant sa projection par la buse ; une enceinte (110) pour confiner l'atmosphère entourant le sable dans les moyens de rétention, **caractérisé en ce qu'**il comprend des moyens (113, 115, 116) pour modifier la teneur en CO₂ de l'atmosphère dans l'enceinte (110).

12. Dispositif selon la revendication 11, dans lequel le liant inorganique est contenu dans un réservoir (170) chauffé.

13. Dispositif selon la revendication 12, pour la mise en oeuvre d'un procédé selon la revendication 7, comprenant : un moyen de chauffage (441, 443) comprenant un faisceau laser (401) focalisé sur une zone exposée à la projection du liant.

14. Dispositif selon la revendication 11, pour la mise en oeuvre du procédé selon la revendication 10, dans lequel la table (531) des moyens de rétention comprend une pluralité d'orifices (560) pour l'injection d'un gaz sous le lit de sable (150).

15. Dispositif selon la revendication 11, dans lequel les moyens de rétention (530) sont créés dans le lit de sable par une agglomération sélective réalisée selon le procédé de la revendication 1.

16. Dispositif selon la revendication 11, pour la mise en oeuvre d'un procédé selon la revendication 10, dans lequel le dispositif comprend une trémie de déversement à ouverture variable.

17. Utilisation du procédé selon la revendication 9 et du dispositif selon la revendication 16, pour la réalisation d'une pièce à propriétés physico-chimiques variables selon différentes directions dans la pièce.

## Patentansprüche

1. Verfahren zum Herstellen einer Struktur (151, 51, 552, 553) aus einem körnigen Material, nämlich Sand, insbesondere eines Formwerkzeugs, umfassend eine additive Herstellungsphase, die die Schritte umfasst, die aus Folgendem bestehen: (i) Ablagern einer Sandschicht; (ii) selektives Agglomerieren der Sandschicht durch Aufsprühen eines anorganischen Bindemittels, das ein in einem Lösungsmittel gelöstes (Meta)silikat vom Typ M₂SiO₃ umfasst, unter Verwendung einer Sprühdüse, wobei M ausgewählt ist aus Na, K und Li, wobei das anorganische Bindemittel vor dem Sprühen auf eine Temperatur zwischen 30 °C und 100 °C erwärmt wird, um ihm eine Viskosität von mehr als 0,005 Pa.s und weniger als 0,2 Pa.s zu verleihen.

2. Verfahren nach Anspruch 1, wobei die Menge des (Meta)silikats im anorganischen Bindemittel zwischen 5 % und 90 %, vorzugsweise zwischen 10 % und 40 % beträgt.

3. Verfahren nach Anspruch 1, wobei dem M Na ist und der Anteil an Natriumsilikat im anorganischen Bindemittel 30 % beträgt.

4. Verfahren nach Anspruch 1, wobei das anorganische Bindemittel Additive in Form von Pigmenten oder Nanopartikeln umfasst.

5. Verfahren nach Anspruch 1, wobei das Lösungsmittel Wasser ist.

6. Verfahren nach Anspruch 1, umfassend nach Schritt ii) einen Schritt, der aus Folgendem besteht: (iii) Trocknen des von dem Aufsprühen des Bindemittels betroffenen Bereichs.

7. Verfahren nach Anspruch 6, wobei das Trocknen durch Erhitzen erfolgt.

8. Verfahren nach Anspruch 6, wobei das Trocknen durch das Inkontaktbringen des Bereichs, der von dem Aufsprühen des Bindemittels betroffen ist, mit CO₂ erfolgt.

9. Verfahren nach Anspruch 1, wobei der Schritt i) mittels eines mit konstanter Geschwindigkeit bewegten Trichters durchgeführt wird, und das einen Schritt umfasst, der nach Schritt ii) darin besteht, eine Schicht aus körnigem Material mit Merkmalen abzulagern, die sich von denen unterscheiden, die beim Durchführen vom vorherigen Schritt i) abgelagert wurden.

10. Verfahren nach Anspruch 1 bis Anspruch 6, das nach Schritt ii) oder nach Schritt iii) einen Schritt umfasst, der aus Folgendem besteht: (iv) Extrahieren der agglomerierten Struktur (551, 552, 553) aus dem Sandbett, umfassend das Injizieren eines Gases unter das Sandbett (150), um den nicht agglomerierten Teil des Sandbetts zu verflüssigen.

11. Vorrichtung zum Durchführen des Verfahrens nach Anspruch 8, wobei die Vorrichtung Folgendes umfasst: Rückhaltemittel (130, 530), die einen Tisch (131, 531) umfassen, der dazu ausgelegt ist, ein Sandbett (150) aufzunehmen; eine Sprühdüse, die dazu ausgelegt ist, das anorganische Bindemittel auf einen definierten Bereich des Sandbetts (150) zu sprühen; Steuerungsmittel (140, 141, 190) für die relative Verschiebung der Düse im Verhältnis zum Sandbett (150); Mittel (121, 122, 123) zum Ablagern einer Sandschicht in den Rückhaltemitteln (130); Heizmittel (261, 262, 263) des anorganischen Bindemittels vor dessen Ausstoß durch die Düse; ein Gehäuse (110) zum Einschließen der den Sand umgebenden Atmosphäre in den Rückhaltemitteln, **dadurch gekennzeichnet, dass** es Mittel (113, 115, 116) zum Modifizieren des CO₂-Gehalts der Atmosphäre im Gehäuse (110) umfasst.

12. Vorrichtung nach Anspruch 11, wobei das anorganische Bindemittel in einem beheizten Behälter (170) enthalten ist.

13. Vorrichtung nach Anspruch 12 zum Durchführen eines Verfahrens nach Anspruch 7, umfassend: Heizmittel (441, 443), die einen Laserstrahl (401) umfassen, der auf einen Bereich fokussiert wird, der dem Sprühen des Bindemittels ausgesetzt ist.

14. Vorrichtung nach Anspruch 11 zum Durchführen des Verfahrens nach Anspruch 10, wobei der Tisch (531) der Rückhaltemittel eine Mehrzahl von Öffnungen (560) zum Injizieren eines Gases unter das Sandbett (150) umfasst.

15. Vorrichtung nach Anspruch 11, wobei das Rückhaltemittel (530) im Sandbett durch selektive Agglomeration gemäß dem Verfahren nach Anspruch 1 erzeugt werden.

16. Vorrichtung nach Anspruch 11 zum Durchführen eines Verfahrens nach Anspruch 10, wobei die Vorrichtung einen Austragstrichter mit variabler Öffnung umfasst.

17. Verwendung des Verfahrens nach Anspruch 9 und der Vorrichtung nach Anspruch 16 zum Herstellen eines Teils mit variablen physikalisch-chemischen Eigenschaften entsprechend verschiedenen Richtungen in dem Teil.

## Claims

1. Method for manufacturing a structure (151, 51, 552, 553) from a granular material, called sand, in particular a mould, including an additive manufacturing phase comprising steps of: (i) depositing a layer of sand; (ii) selectively agglomerating the layer of sand by spraying, by means of a spray nozzle, of an inorganic binder comprising a M₂SiO₃ type (meta)silicate dissolved in a solvent, where M is selected from Na, K and Li, wherein the inorganic binder is heated prior to its spraying at a temperature comprised between 30°C and 100°C so as to confer thereon a viscosity higher than 0.005 Pa.s and lower than 0.2 Pa.s.

2. Method according to claim 1, wherein the quantity of (meta)silicate in the inorganic binder is comprised between 5% and 90%, preferably between 10% and 40%.

3. Method according to claim 1, wherein M is Na and the proportion of sodium silicate in the inorganic binder is equal to 30%.

4. Method according to claim 1, wherein the inorganic binder comprises additives in the form of pigments or nanoparticles.

5. Method according to claim 1, wherein the solvent is water.

6. Method according to claim 1, comprising after step ii), a step of: (iii) drying the zone affected by the spraying of the binder.

7. Method according to claim 6, wherein the drying is obtained by heating.

8. Method according to claim 6, wherein the drying is obtained by putting the zone affected by the spraying of the binder in contact with CO₂.

9. Method according to claim 1, wherein step i) is carried out by means of a hopper moved at a constant speed and which comprises a step consisting after step ii) of depositing a layer of granular material of characteristics different from that deposited during the carrying out of preceding step i).

10. Method according to claim 1 or 6, comprising after step ii) or after step iii), a step of: (iv) extracting the agglomerated structure (551, 552, 553) from the sand bed, comprising the injection of a gas under the sand bed (150) in order to fluidify the non-agglomerated part of said sand bed.

11. Device for the implementation of the method according to claim 8, which device comprises: retention means (130, 530) comprising a table (131, 531), able to contain a sand bed (150); a spray nozzle able to spray the inorganic binder on a defined zone of the sand bed (150); controlled means (140, 141, 190) for the relative movement of the nozzle with respect to the sand bed (150); means (121, 122, 123) for depositing a layer of sand in the retention means (130); means for heating (261, 262, 263) the inorganic binder before its spraying by the nozzle; a chamber (110) for confining the atmosphere surrounding the sand in the retention means, **characterised in that** it comprises means (113, 115, 116) for modifying the CO₂ content of the atmosphere in the chamber (110).

12. Device according to claim 11, wherein the inorganic binder is contained in a heated reservoir (170).

13. Device according to claim 12, for the implementation of a method according to claim 7, comprising: a heating means (441, 443) comprising a laser beam (401) focused on a zone exposed to the spraying of the binder.

14. Device according to claim 11, for the implementation of the method according to claim 10, wherein the table (531) of the retention means comprises a plurality of holes (560) for the injection of a gas under the sand bed (150).

15. Device according to claim 11, wherein the retention means (530) are created in the sand bed by a selective agglomeration carried-out according to the method of claim 1.

16. Device according to claim 11, for the implementation of a method according to claim 10, wherein the device comprises a discharge hopper with a variable opening.

17. Use of the method according to claim 9 and of the device according to claim 16, for producing a part having variable physicochemical properties according to different directions in the part.
